# EUROPÄISCHE PATENTSCHRIFT

(11) **EP 0 580 683 B1**
(45) Veröffentlichungstag und Bekanntmachung des Hinweises auf die Patenterteilung: **08.11.1995**
(21) Anmeldenummer: 92908563.7
(22) Anmeldetag: 13.04.1992
(51) Int. Cl.: F23D 17/00, F23L 7/00

(54) **BRENNERANORDNUNG, INSBESONDERE FÜR GASTURBINEN, ZUR SCHADSTOFFARMEN VERBRENNUNG VON KOHLEGAS UND ANDEREN BRENNSTOFFEN**
BURNER ARRANGEMENT, ESPECIALLY FOR GAS TURBINES, FOR THE LOW-POLLUTANT COMBUSTION OF COAL GAS AND OTHER FUELS
BRULEUR, EN PARTICULIER POUR TURBINES A GAZ, POUR LA COMBUSTION PEU POLLUANTE DU GAZ DE HOUILLE ET D'AUTRES COMBUSTIBLES

(30) Priorität: 25.04.1991 DE 4113580
(43) Veröffentlichungstag der Anmeldung: 02.02.1994
(73) Patentinhaber: SIEMENS AKTIENGESELLSCHAFT, 80333 München (DE)
(72) Erfinder: BECKER, Bernard, D-4330 Mülheim (DE)
(86) Internationale Anmeldenummer: DE9200303
(87) Internationale Veröffentlichungsnummer: WO9219913

(56) Entgegenhaltungen:
- EP-A- 0 193 838
- EP-A- 0 276 696
- WORLD PATENTS INDEX LATEST Section PQ, Week 8536, 17. Oktober 1985 Derwent Publications Ltd., London, GB; Class Q73, AN 85-222105 & SU-A-1 138 601 (KRASAVIN) 7. Februar 1985
- WORLD PATENTS INDEX LATEST Section PQ, Week 8933, 27. September 1989 Derwent Publications Ltd., London, GB; Class Q73, AN 89-240275 & SU-A-1 458 651 (BUILDING SEISMOSTAB) 15. Februar 1989

## Beschreibung

Die Erfindung betrifft einen Brenner für fluidische Brennstoffe, insbesondere Öl, Erdgas und/oder Kohlegas, wie er für Gasturbinen Anwendung findet.

Im Hinblick auf die weltweiten Bemühungen zur Senkung des Schadstoffausstoßes von Feuerungsanlagen, insb. bei Gasturbinen, wurden in den letzten Jahren Brenneranordnungen entwickelt, welche besonders geringe Ausstöße an Stickoxiden (NOX) haben. Dabei wird vielfach Wert darauf gelegt, daß solche Brenner jeweils nicht nur mit einem Brennstoff, sondern möglichst mit verschiedenen Brennstoffen, beispielsweise Öl, Erdgas und/oder Kohlegas wahlweise oder sogar in Kombination betreibbar sind, um die Versorgungssicherheit und Flexibilität beim Betrieb zu erhöhen. Solche Brenner sind beispielsweise in der EP 0 276 696 Bl beschrieben.

Ein Problem bei der Auslegung von Brennern für alle möglichen verschiedenen Betriebsbedingungen und Betriebsstoffe besteht darin, daß die beim Betrieb jeweils benötigten Volumina der einzelnen Betriebsstoffe völlig verschieden sind, so daß es Schwierigkeiten macht, für alle Betriebsstoffe das gleiche Zuführungssystem und die gleichen Eindüsungsöffnungen zu verwenden. Daher ist es im Stand der Technik bekannt, für flüssige und gasförmige Stoffe verschiedene Zuführunossysteme zu verwenden. Ein weiteres Problem stellt sich aber auch dann, wenn wahlweise gasförmige Brennstoffe mit völlig verschiedenen spezifischen Brennwerten, beispielsweise Erdgas und Kohlegas, eingesetzt werden sollen. Die völlig verschiedenen Volumenverhältnisse bei Verwendung dieser beiden Brennstoffe und die unterschiedlichen chemischen Vorgänge bei deren Verbrennung erfordern eine Modifizierung oder Erweiterung der bekannten Systeme.

In einer Veröffentlichung "The Development of Integrated Coal-Gasification Combined-Cycle (ICG-GUD) Power Plants" von John S. Joyce, Vortrag vom 26.04.90 in Arnheim (schriftliche Fassung wurde verteilt) ist in Fig. 4 ein Brenner beschrieben, welcher sich wahlweise für die Verbrennung von Erdgas oder Gas mit niedrigem spezifischem Brennwert eignet. Bei dieser Anordnung handelt es sich jedoch für beide Brennstoffe um einen Diffusionsbrenner, was beim Betrieb mit Erdgas zu höheren Emissionswerten für NOX führt als dies bei einem Vormischbrenner der Fall wäre.

Aufgabe der vorliegenden Erfindung ist es daher, eine Brenneranordnung zu schaffen, welche sich sowohl für die Verbrennung von Brenngas mit niedrigem Brennwert in einer Diffusionsflamme als auch für die Verbrennung von Brenngas mit einem hohen Brennwert und/oder die Verbrennung von Öl im Vormischbetrieb eignet. Dabei soll die Betriebssicherheit der bekannnten Anordnungen erhalten bleiben und der zusätzliche apparative Aufwand gering sein. Die Systeme sollen gegenseitig keine negative Beeinflussung der Qualität der Verbrennung hervorrufen, wobei insbesondere eine unerwünschte Flammenbildung an Verwirbelungsstellen im System vor der eigentlichen Brennzone vermieden werden soll.

Zur Lösung dieser Aufgabe dient eine Brenneranordnung mit etwa konzentrisch angeordneten Ringkanälen zur Zuführung verschiedener Betriebsmedien und einem äußeren, sich etwa konisch verjüngenden Luft-Zufuhr-Ringkanalsystem, wobei durch eine Vielzahl von Auslaßdüsen ein gasförmiges Medium oder ein flüssiges Medium einem in dem Luft-Zufuhr-Ringkanalsystem strömenden Luftstrom fein verteilt beimischbar ist, und wobei zuströmseitig oberhalb der Auslaßdüsen ein weiterer Ringkanal in das Luft-Zufuhr-Ringkanalsystem mündet.

Die Erfindung geht dabei von der Erkenntnis aus, daß bei der Verbrennung von Brenngas mit niedrigem Brennwert keine besonderen Maßnahmen zur Senkung des Schadstoffausstoßes erforderlich sind, da bei Verbrennung solcher Gase keine sehr hohen Flammentemperaturen auftreten und damit die Bildung von NOX praktisch unbedeutend bleibt. Es genügt daher, ein weiteres einfaches Zufuhrsystem zu schaffen, wobei jedoch darauf geachtet werden muß, daß dieses System die anderen Systeme nicht nachteilig beeinflußt und auch nicht bei Betrieb der anderen Systeme die Betriebssicherheit verringert. Deshalb ist es wichtig, daß der weitere Ringkanal zuströmseitig oberhalb der Auslaßdüsen für die anderen Brennstoffe mündet. Auf diese Weise kann kein zündfähiges Gemisch in den weiteren Ringkanal gelangen, wenn der Brenner durch die Auslaßdüsen mit Brennstoff anderer Art versorgt wird.

Vorteilhafte Ausgestaltungen der Erfindung sind in den abhängigen Ansprüchen angegeben.

So schmiegt sich vorteilhafterweise der weitere Ringkanal an die anderen Ringkanäle zur Zuführung der Betriebsmedien an, so daß also der weitere Ringkanal innen in das Luft-Zufuhr-Ringkanalsystem mündet. Weiterhin kann das zusätzliche Zufuhrsystem für einen weiteren Brennstoff insbesondere kombiniert werden mit einem Luft-Zufuhr-Ringkanalsystem, welches abströmseitig eine Drallbeschaufelung aufweist, unterhalb oder innerhalb derer Auslaßdüsen für ein flüssiges Medium angeordnet sind. Alternativ oder zusätzlich ist eine Kombination mit einer Vielzahl von Auslaßdüsen für ein gasförmiges Medium möglich. Besonders günstig ist es dabei, die Auslaßdüsen für ein gasförmiges Medium in der Drallbeschaufelung selbst vorzusehen. Dazu werden die Drallschaufeln als Hohlschaufeln ausgebildet und an ein Zuführsystem für ein gasförmiges Medium angeschlossen. Eine Vielzahl von Auslaßdüsen an den Drallschaufeln, welche vorzugsweise etwa senkrecht zur örtlich jeweils vorherrschenden Strömungsrichtung gerichtet sind, ermöglicht eine gleichmäßige Beimischung eines gasförmigen Mediums zum Luftstrom. Dabei können zusätzlich noch Düsen verschiedener Durchmesser mit entsprechend unterschiedlicher Reichweite der austretenden Strahlen verwendet werden.

Hauptanwendungsfall zur Ausnutzung des weiteren Ringkanals ist die Zuführung eines Brenngases mit niedrigem spezifischen Brennwert (Low Btu gas), insbesondere Kohlegas.

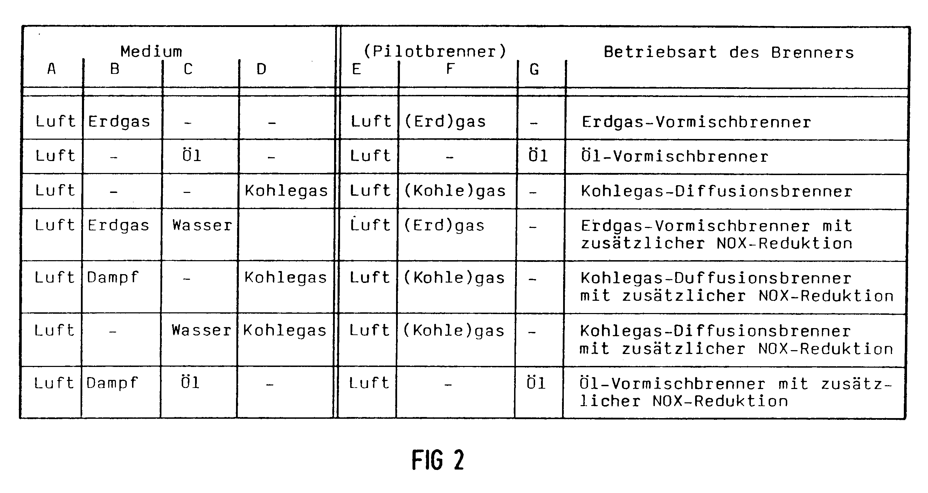

Dabei bildet das Luft-Zufuhr-Ringkanalsystem und der weitere Ringkanal im Prinzip einen Diffusionsbrenner zur Verbrennung von Brenngas mit niedrigem spezifischen Brennwert mit Luft. Zwar findet eine gewisse Vorvermischung auf dem relativ langen Weg bis zur eigentlichen Verbrennungszone statt, jedoch nicht in dem bei Vormischbrennern bekannten Maße. Insbesondere ist direkt hinter der Mündung des weiteren Ringkanals bis zum Bereich der Drallbeschaufelung nicht mit unerwünschter Zündung eines womöglich entstandenen Luft-Brenngas-Gemisches zu rechnen. Die Hauptbetriebsarten eines erfindungsgemäßen Brenners ergeben sich aus der Tabelle in Fig. 2, wobei im Prinzip noch Kombinationen der dort dargestellten Hauptbetriebsarten möglich sind. Zu erwähnen sei, daß zur Stabilisierung der Verbrennungsflamme bei den erfindungsgemäßen Brenneranordnungen im allgemeinen ein Pilotbrennersystem erforderlich sein wird, welches eine zentrale stabile Flamme aufrechterhält, wie dies nach dem Stand der Technik in verschiedenen Varianten bekannt ist. Hierfür eignet sich jedes bekannte Pilotbrennersystem, wobei besonders bevorzugt natürlich der Pilotbrenner jeweils mit dem gleichen Brennstoff betrieben werden kann wie der Hauptbrenner. Dies ist in der Tabelle mitangegeben.

Ein Ausführungsbeispiel der Erfindung ist in der Zeichnung dargestellt, und zwar zeigen
Fig. 1 ein bevorzugtes Ausführungsbeispiel der Erfindung in einem Längsaxialschnitt durch die annähernd rotationssymmetrische Anordnung und
Fig. 2 eine Tabelle mit den Hauptbetriebsmöglichkeiten einer erfindungsgemäßen Brenneranordnung.

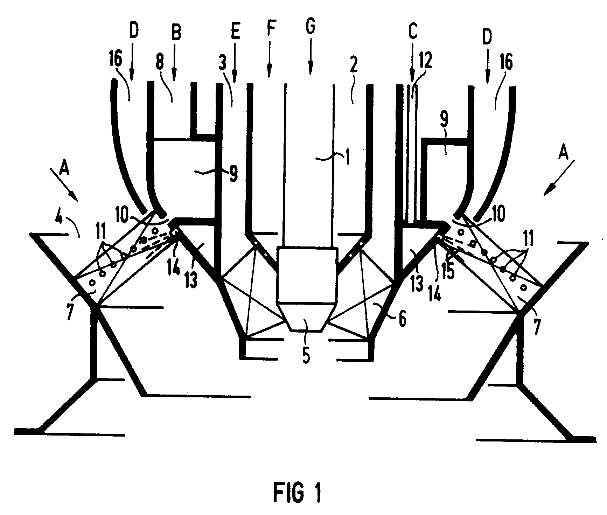

Fig. 1 zeigt in schematischer Darstellung einen Längsaxialschnitt durch eine erfindungsgemäße Brenneranordnung, wobei ausdrücklich auf die EP-0 276 696 Bl und die EP-0 193 838 Bl Bezug genommen wird, soweit es um hier nicht unbedingt entscheidende Einzelheiten der Anordnung geht. Dabei ist festzustellen, daß die Anordnung gegenüber dem Stand der Technik der EP-0 276 696 Bl durch eine günstige Modifizierung und Ergänzung durch einen Ringkanal 16 sowie durch Verlegung der Auslaßdüsen für Erdgas in die Drallbeschaufelung verändert ist.

Die Brenneranordnung, die, ggf. in Verbindung mit mehreren gleichartigen Anordnungen, beispielsweise in der Brennkammer einer Gasturbinenanlage eingesetzt werden kann, besteht aus einem inneren Teil, dem Pilotbrennersystem und einem konzentrisch dazu liegenden äußeren Teil, dem Hauptbrennersystem. Beide Systeme sind für einen Betrieb mit gasförmigen und/oder flüssigen Brennstoffen in beliebiger Kombination geeignet. Das Pilotbrennersystem besteht aus einer zentralen Ölzuführung 1 (Medium G) und einem konzentrisch um diesen herum angeordneten inneren Gas-Zufuhrkanal 2 (Medium F). Dieser wiederum ist umgeben von einem konzentrisch angeordneten inneren Luft-Zufuhrkanal 3 (Medium E). In oder an diesem Kanal kann ein geeignetes Zündsystem angeordnet sein, für welches viele Ausführungsmöglichkeiten bekannt sind und auf dessen Darstellung hier verzichtet wurde. Die zentrale Ölzuführung 1 weist an ihrem Ende eine Öldüse 5 auf, der innere Luft-Zufuhrkanal 3 weist in seinem Endbereich eine Drallbeschaufelung 6 auf. Das Pilotbrennersystem 1, 2, 3, 5, 6 kann in an sich bekannter Weise betrieben werden.

Das Hauptbrennersystem besteht aus einem konzentrisch zum Pilotbrennersystem angeordneten und schräg auf dieses zulaufenden äußeren Luft-Zufuhr-Ringkanalsystem 4. Auch dieses LuftZufuhr-Ringkanalsystem 4 ist mit einer Drallbeschaufelung 7 versehen. Die Drallbeschaufelung 7 besteht aus Hohlschaufeln mit Auslaßdüsen 11 im Strömungsquerschnitt des Luft-Zufuhr-Ringkanalsystems 4 (Medium A). Diese werden aus einer Zuführungsleitung 8 und einem Ringkanal 9 durch Öffnungen 10 für das Medium B gespeist. Zusätzlich weist der Brenner eine Zuführungsleitung 12 für ein Medium C auf, welche in einen Ringkanal 13 mündet, welcher Auslaßdüsen 14 für das Medium C im Bereich oder unterhalb der Drallbeschaufelung 7 aufweist. Angedeutet ist auch der Sprühstrahl 15 des Mediums C. Erfindungsgemäß weist der Brenner zusätzlich einen weiteren Kohlegas-Zuführkanal 16 (für Medium D) auf. Dieser mündet knapp oberhalb der Drallbeschaufelung 7 mit den Auslaßdüsen 11 in das äußere Luft-Zufuhr- Ringkanalsystem 4, und zwar an dessen Innenseite, so daß beide zusammen im Prinzip einen Diffusionsbrenner bilden. Wichtig ist dabei, daß bei einem Betrieb mit dem Medium B, z. B. Erdgas, keine Rezirkulation dieses Mediums an Kanten oder in den Kohlegas-Zuführkanal 16 möglich ist, was die Betriebssicherheit beeinträchtigen könnte. Auch soll der Kohlgas-Zuführkanal 16 nicht die Strömung unterhalb seiner Einmündung stören, so daß die guten Verbrennungseigenschaften für die Medien B und C unverändert erhalten bleiben. Würde der Kohlegas-Zuführkanal 16 unterhalb der Auslaßdüsen 11 für Medium B oder der Auslaßdüsen 14 für Medium C münden, so ergäbe sich an dieser Stelle eine Querschnittserweiterung und eine Störung der Randströmung, was beides unerwünscht wäre. Die erfindungsgemäße Anordnung des Kohlegas-Zuführkanals 16 und der Hohlschaufeln als Drallbeschaufelung 7 erfordert nur geringfügige Modifikationen an dem Brennersystem nach dem Stand der Technik und ist daher baulich mit geringem Aufwand zu verwirklichen.

Die Tabelle in Fig. 2 zeigt, welche Möglichkeiten es für die Wahl der Medien und damit für verschiedene Betriebsweisen der Brenneranordnung gibt. Sie kann bei für den Schadstoffausstoß jeweils günstigen Eigenschaften mit Erdgas, Kohlegas oder einem anderen Gas mit niedrigem Brennwert, sowie mit Öl betrieben werden. Ist bei einer der Betriebsarten eine weitere Reduzierung des Schadstoffausstoßes erwünscht, so kann durch die bei dieser Betriebart für die Brennstoffzufuhr nicht benötigten Systeme gegebenenfalls ein Inertstoff zugeführt werden, insbesondere Wasser oder Dampf, ggf. auch mit Zusatzstoffen, falls dies gewünscht wird. Die Umschaltung der einzelnen Zufuhrsysteme auf die jeweils gewünschten Medien kann durch einfache Mehrwegearmaturen, die zum Stand der Technik gehören, erreicht werden. Der apparative Aufwand bleibt gering, obwohl für jeden Betriebsstoff die jeweils umweltschonendste Verbrennungsart verwirklicht wird. Insbesondere wird die NOX-Emission bei allen Betriebsarten minimiert.

## Patentansprüche

1. Brenneranordnung mit etwa konzentrisch angeordneten Ringkanälen (2, 3, 9, 13) zur Zuführung verschiedener Betriebsmedien (B, C, E, F) und einem äußeren, sich etwa konisch verjüngenden Luft-Zufuhr-Ringkanalsystem (4), wobei durch eine Vielzahl von Auslaßdüsen (11; 14) ein gasförmiges Medium (B) oder ein flüssiges Medium (C) einem in dem Luft-Zufuhr-Ringkanalsystem (4) strömenden Luftstrom (A) fein verteilt beimischbar ist, **dadurch gekennzeichnet**, daß zuströmseitig oberhalb der Auslaßdüsen (11; 14) ein weiterer Ringkanal (16) in das Luft-Zufuhr-Ringkanalsystem (4) mündet.

2. Brenneranordnung nach Anspruch 1, bei der der weitere Ringkanal (16) innen in das Luft-Zufuhr-Ringkanalsystem (4) mündet.

3. Brenneranordnung nach Anspruch 1 oder 2, **dadurch gekennzeichnet**, daß das Luft-Zufuhr-Ringkanalsystem (4) abströmseitig eine Drallbeschaufelung (7) aufweist, wobei in deren Bereich oder stromabwärts von diesen Auslaßdüsen (14) für ein flüssiges Medium (C) angeordnet sind.

4. Brenneranordnung nach einem der vorhergehenden Ansprüche, **dadurch gekennzeichnet**, daß das Luft-Zufuhr-Ringkanal-system (4) abströmseitig eine Drallbeschaufelung (7) aufweist, die aus Hohlschaufeln besteht und eine Vielzahl von Auslaßdüsen (11) zur Beimischung eines gasförmigen Mediums (B) zum Luftstrom aufweist.

5. Brenneranordnung nach einem der vorhergehenden Ansprüche, **dadurch gekennzeichnet**, daß der weitere Ringkanal (16) für die Zuführung eines Brenngases (D) mit niedrigem spezifischen Brennwert (Low Btu gas), insbesondere Kohlegas, ausgelegt ist.

6. Brenneranordnung nach einem der vorhergehenoen Ansprüche, **dadurch gekennzeichnet**, daß das Luft-Zufuhr-Ringkanalsystem (4) und der weitere Ringkanal (16) einen Diffusionsbrenner zur Verbrennung von Brenngas mit niedrigem spezifischen Brennwert mit Luft bilden.

7. Brenneranordnung nach einem der vorhergehenden Ansprüche, **gekennzeichnet**, durch Auslaßdüsen zur Beimischung von Erdgas als gasförmiges Medium (B).

8. Brenneranordnung nach einem der Ansprüche 1 bis 6, **gekennzeichnet**, durch Auslaßdüsen zur Beimischung von Wasserdampf als gasförmiges Medium (B).

9. Brenneranordnung nach einem der Ansprüche 1 bis 6 oder 8, **gekennzeichnet**, durch Auslaßdüsen zur Beimischung von Öl als Flüssiges Medium (C).

10. Brenneranordnung nach einem der Ansprüche 1 bis 7, **gekennzeichnet**, durch Auslaßdüsen zur Beimischung von Wasser als Flüssiges Medium (C).

11. Brenneranordnung nach einem der vorhergehenden Ansprüche, **dadurch gekennzeichnet**, daß die Auslaßdüsen (11; 14) und der weitere Ringkanal (16) so angeordnet sind, daß keine Rezirkulation des gasförmigen Mediums (B) und/oder des flüssigen Mediums (C) in den weiteren Ringkanal (16) möglich ist.

12. Brenneranordnung nach einem der vorhergehenden Ansprüche, **dadurch gekennzeichnet**, daß der weitere Ringkanal (16) unmittelbar oberhalb der Drallbeschaufelung (7) mündet, so daß im Bereich der Drallbeschaufelung keine Zündung entstehen kann.

13. Brenneranordnung nach einem der vorhergehenden Ansprüche, **dadurch gekennzeichnet**, daß etwa konzentrisch angeordnete innere Zufuhrkanäle (1, 2, 3) der Zufuhr von Luft (E), gasförmigem Brennstoff (F) und/oder flüssigem Brennstoff (G) zur Erzeugung einer die Flamme der ganzen Brenneranordnung stabilisierenden Pilotflamme dienen.

## Claims

1. A burner arrangement comprising approximately concentrically disposed annular conduits (2, 3, 9, 13) for delivering various operating media (B, C, E, F) and an approximately conically tapering outer annular-conduit air delivery system (4), wherein through a plurality of outlet nozzles (11; 14) a gaseous medium (B) or a liquid medium (C) can be admixed in finely distributed form into an air stream (A) flowing in the annular-conduit air delivery system (4), characterised in that on the inflow side a further annular conduit (16) discharges into the annular-conduit air delivery system (4) above the outlet nozzles (11; 14).

2. A burner arrangement according to claim 1, wherein the further annular conduit (16) discharges into the annular-conduit air delivery system (4) on the inside.

3. A burner arrangement according to claim 1 or claim 2, characterised in that the annular-conduit air delivery system (4) has a swirl vane system (7) on the downstream side, outlet nozzles (14) for a liquid medium (C) being disposed in the region of or downstream of the swirl vane system (7).

4. A burner arrangement according to any preceding claim, characterised in that the annular-conduit air delivery system (4) has a swirl vane system (7) on the downstream side which includes hollow vanes and has a plurality of outlet nozzles (11) for admixing a gaseous medium (B) with the air stream.

5. A burner arrangement according to any preceding claim, characterised in that the further annular conduit (16) is designed to deliver a fuel gas (D) having a low gross calorific value (low BTU gas), particularly coal gas.

6. A burner arrangement according to any preceding claim, characterised in that the annular-conduit air delivery system (4) and the further annular conduit (16) constitute a diffusion burner for combustion of fuel gas with a low gross calorific value with air.

7. A burner arrangement according to any preceding claim, characterised by having outlet nozzles for admixing natural gas as the gaseous medium (B).

8. A burner arrangement according to any one of claims 1 to 6, characterised by having outlet nozzles for admixing water vapour as the gaseous medium (B).

9. A burner arrangement according to any one of claims 1 to 6 or 8, characterised by having outlet nozzles for admixing oil as the liquid medium (C).

10. A burner arrangement according to any one of claims 1 to 7, characterised by having outlet nozzles for admixing water as the liquid medium (C).

11. A burner arrangement according to any preceding claim, characterised in that the outlet nozzles (11; 14) and the further annular conduit (16) are disposed so that recirculation of the gaseous medium (B) and/or of the liquid medium (C) into the further annular conduit (16) is not possible.

12. A burner arrangement according to any preceding claim, characterised in that the further annular conduit (16) discharges directly above the swirl vane system (7), so that ignition cannot occur in the vicinity of the swirl vane system.

13. A burner arrangement according to any preceding claim, characterised in that approximately concentrically disposed inner delivery conduits (1, 2, 3) serve to deliver air (E), gaseous fuel (F) and/or liquid fuel (G) to produce a pilot flame stabilising the flame of the entire burner arrangement.

## Revendications

1. Brûleur comprenant des canaux annulaires (2, 3, 9, 13) disposés de manière à peu près concentrique pour l'alimentation de différents carburants (B, C, E, F) et un système externe (4) de canaux annulaires d'amenée d'air se rétrécissant de manière à peu près conique, un milieu gazeux (B) ou un milieu liquide (C), finement distribué, pouvant être ajouté, au moyen de plusieurs buses d'émission (11; 14), à un courant d'air (A) circulant dans le système (4) de canaux annulaires d'amenée d'air, caractérisé en ce que, du côté de l'affluence, au-dessus des buses d'émission (11; 14), un canal annulaire supplémentaire (16) débouche dans le système (4) de canaux annulaires d'amenée d'air.

2. Brûleur selon la revendication 1, dans lequel le canal annulaire supplémentaire (16) débouche à l'intérieur du système (4) de canaux annulaires d'amenée d'air.

3. Brûleur selon la revendication 1 ou 2, caractérisé en ce que le système (4) de canaux annulaires d'amenée d'air comporte, sur le côté d'évacuation, un aubage à tourbillonnement (7), des buses d'émission (14) pour un milieu liquide (C) étant situées dans la région de cet aubage ou en aval de celui-ci.

4. Brûleur selon l'une des revendications précédentes, caractérisé en ce que le système (4) de canaux annulaires d'amenée d'air comporte, sur le côté d'évacuation, un aubage à tourbillonnement (7) formé d'aubes creuses, et est pourvu d'une pluralité de buses d'émission (11) pour l'addition d'un milieu gazeux (B) au courant d'air.

5. Brûleur selon l'une des revendications précédentes, caractérisé en ce que le canal annulaire supplémentaire (16) est étudié pour l'alimentation d'un gaz combustible (D) ayant un faible pouvoir calorifique spécifique (Low Btu gas), plus particulièrement du gaz de houille.

6. Brûleur selon l'une des revendications précédentes, caractérisé en ce que le système (4) de canaux annulaires d'amenée d'air et le canal annulaire supplémentaire (16) forment un brûleur diffuseur pour la combustion d'un gaz combustible à faible pouvoir calorifique spécifique avec l'air.

7. Brûleur selon l'une des revendications précédentes, caractérisé par des buses d'émission pour l'addition de gaz naturel comme milieu gazeux (B).

8. Brûleur selon l'une des revendications 1 à 6, caractérisé par des buses d'émission pour l'addition de vapeur d'eau comme milieu gazeux (B).

9. Brûleur selon l'une des revendications 1 à 6 ou 8, caractérisé par des buses d'émission pour l'addition d'huile comme milieu liquide.

10. Brûleur selon l'une des revendications 1 à 7, caractérisé par des buses d'émission pour l'addition d'eau comme milieu liquide.

11. Brûleur selon l'une des revendications précédentes, caractérisé en ce que les buses d'émission (11; 14) et le canal annulaire supplémentaire (16) sont disposés de manière à ce qu'il ne puisse pas y avoir de remise en circulation du milieu gazeux (B) et/ou du milieu liquide (C) dans le canal annulaire supplémentaire (16).

12. Brûleur selon l'une des revendications précédentes, caractérisé en ce que le canal annulaire supplémentaire (16) débouche directement au-dessus de l'aubage à tourbillonnement (7), de manière à ce qu'il ne puisse pas se produire d'allumage dans la région de l'aubage à tourbillonnement.

13. Brûleur selon l'une des revendications précédentes, caractérisé en ce que des canaux d'alimentation internes (1, 2, 3) disposés de manière à peu près concentrique servent à l'alimentation d'air (E), de combustible gazeux (F) et/ou de combustible liquide (G) pour produire une flamme pilote qui stabilise la flamme de tout le brûleur.
